# EUROPEAN PATENT SPECIFICATION

(11) **EP 1 893 904 B1**
(45) Date of publication and mention of the grant of the patent: **23.12.2009**
(21) Application number: 06727071.0
(22) Date of filing: 11.05.2006
(51) Int. Cl.: F16L 39/00, E03C 1/06

(54) **A MIXER VALVE APPARATUS AND A WATER DELIVERY APPARATUS**
MISCHVENTILVORRICHTUNG UND WASSERZUFUHRVORRICHTUNG
ROBINET MITIGEUR ET APPAREIL DE DISTRIBUTION D'EAU

(30) Priority: 13.05.2005 GB 0509790
(43) Date of publication of application: 05.03.2008
(73) Proprietor: Bristan Group Limited, Staffordshire B78 1SG (GB)
(72) Inventor: PEGDEN, Peter J., H., Yorkshire HU7 4AE (GB); GIBBS, Roderick J., Shropshire WS15 1JX (GB)
(74) Representative: Croston, David
(86) International application number: PCT/GB2006/001717
(87) International publication number: WO 2006/120443

(56) References cited:
- EP-A- 0 080 591
- FR-A- 2 201 746
- FR-A- 2 713 301
- GB-A- 2 050 157

## Description

The invention relates to a mixer valve apparatus and a water delivery apparatus particularly, although not exclusively, for use in a shower assembly.

Normally, the supply to a shower mixer valve comprises two separate pipes, one carrying cold and the other hot. In exposed pipe installations, this means that the pipe carrying hot water can be uncomfortably hot to the touch whilst the cold pipe can be cold enough to generate condensation which, in turn, can cause problems of water, limescale and corrosion.

It is known in some European household installations to provide separate hot and cold water supply pipes, each having an outer, fluid-tight pipe around them so that in the event of a leak, the fluid is contained. Cabling can be passed along the fluid tight outer pipe as in EP0080591.

It is also known to provide a hot water tube inside a cold water tube in a basin mixer spout, downstream of the faucet valve. In those circumstances, the water is only mixed on exiting the spout as individual hot or cold water controls are provided.

One known water supply apparatus is shown in European Patent Application No.1227190. In that system, hot and cold water is supplied separately to an electronically controlled valve which mixes the separate hot and cold streams to supply warm, mixed water to a shower. The mixed water passes from the valve, which is normally located in the space between the ceiling and floor or in the loft space of a building, to the shower down a water pipe in a riser rail. A control panel or dial for the valve is located on the riser rail and the cable to transmit control signals from the control panel to the valve passes up the riser rail. The remote location of the valve necessitates an electronic control which can be prone to failure.

In GB2050157, a mixing valve is shown which is integrated into a shower head. A manually operated temperature valve is provided and the hot water supply to the shower head runs inside the cold water supply.

It is an object of the invention to provide an improved mixer valve apparatus and water supply apparatus.

According to the invention there is provided a mixer valve apparatus comprising a body defining a cold water manifold and, a hot water manifold, the cold water manifold being arranged to receive cold water from a cold water supply pipe and the hot water manifold being arranged to receive water from a hot water supply pipe extending inside the cold water supply pipe, the cold water manifold having a cold water inlet and the hot water manifold having a hot water inlet, the hot water inlet being arranged within and completely surrounded by the cold water manifold, a mixing chamber for mixing the water from the cold and hot water manifolds and a mixed water outlet in communication with the mixing chamber to allow mixed water to pass from the mixing chamber out of the body. The hot water inlet is downstream of the cold water inlet.

The cold water inlet is preferably arranged to receive a 25mm diameter pipe and the hot water inlet is arranged to receive a 15mm diameter pipe.

The cold and hot water pipes are preferably circular and most preferably are arranged coaxially.

A mixer valve apparatus, a shower assembly and a hot and cold water supply manifold will now be described in detail by way of example and with reference to the accompanying drawings, in which:-
Fig.1 is a cross-section through a thermostatic mixer valve apparatus in accordance with the first to third aspects of the invention,
Fig.2 is a cross-section taken through the thermostatic mixer valve apparatus of Fig. 1 on line II-II,
Fig.3 is a cross-section through an alternative thermostatic mixer valve apparatus in accordance with the first to third aspects of the invention,
Fig.4 is a cross-section through the thermostatic mixer valve apparatus of Fig.3 taken on line IV-IV in Fig.3,
Fig.5 is a cross-section through a hot and cold water supply manifold in accordance with the sixth aspect of the invention,
Fig.6 is a cross-section through the hot and cold supply manifold of Fig.5 taken on line VI-VI in Fig.5,
Fig.7 is a front elevation of a water supply apparatus in accordance with the fifth aspect of the invention applied to a shower assembly with parts shown in cross-section for clarity, and
Fig. 8 is a schematic sectional view of part of the thermostatic mixer valve apparatus.

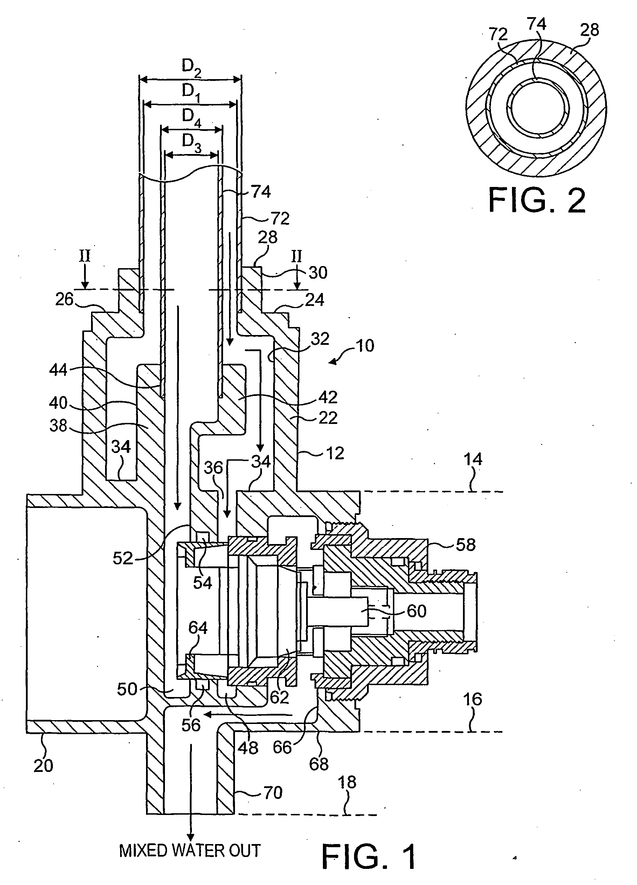

In Fig.1 a thermostatic mixer valve apparatus 10 comprises a hollow tubular body 12. The body 12 includes an inlet part 14, a mixing part 16 and an outlet part 18. The body 12 further comprises a mounting formation 20 protruding from the rear face thereof to enable the body 12 to be mounted, for example to a shower cubicle wall.

The inlet part 14 of the hollow tubular body 12 comprises a cylindrical outer wall 22 closed at one end by an end wall 24. The end wall 24 has a first inlet aperture 26 formed therethrough having a first inlet diameter D1. The aperture 26 is surrounded by an upstanding, circular outer pipe receiving wall 28. The inner diameter D2 defined by the outer pipe receiving wall 28 is slightly larger than the diameter D1 formed by the aperture 26. That provides a shoulder 30 against which the end of a pipe received in the pipe-receiving wall 28 can abut. The difference in diameters between diameters D1 and D2 is preferably equal to the wall thickness of a pipe to be received in the pipe-receiving wall 28.

The cylindrical wall 22 and the end wall 24 define a chamber 32 which is in fluid communication with the inlet aperture 26. The opposite side of the chamber 32 from the end wall 24 is closed off by an opposite end wall 34. A passageway 36 is formed through the opposite end wall 34.

An inner pipe-receiving formation 38 extends from the opposite end wall 34 towards the end wall 24. The inner pipe-receiving formation comprises a circular inner pipe receiving wall 40 which surrounds an inlet aperture 42. The inner inlet aperture 42 has a diameter D3 and the inner diameter of the circular inner pipe-receiving wall 40 has a diameter D4. The diameter D4 is larger than the diameter D3 so as to define a shoulder 44 against which an inner pipe received in the inner pipe-receiving wall can abut. Again, the difference in diameters D3 and D4 is equal to the pipe wall thickness. The inner aperture 42 opens into a fluid passageway 46 which passes through the opposite end wall 34. The fluid passageways 36, 46 pass through the opposite end wall 34 and each open into separate respective manifolds 48, 50. Each manifold 48, 50 is annular and the manifold 48 is separated from the manifold 50 by means of an annular wall 52, which carries an O-ring seal 54 in an O-ring channel 56.

A known thermostatic mixer valve 58 is received in the body 12 in the mixing part 16. The construction and operation of the thermostatic valve 58 is known and will only be described in cursory detail. The valve 58 comprises a thermostat 60 which expands or contracts against an abutment dependent upon the temperature of fluid passing through the valve 58. The starting position of the abutment is determined by the user. The thermostat acts upon a distributor 62 which in turn acts against a piston 64. The piston 64 is formed as a hollow cylinder with a sealed sliding fit against the O-ring 54. As can be seen in Fig.1, the length of the side walls of the cylindrical piston 64 is insufficient to close off both the manifolds 48, 50. When hot water is provided to one of the manifolds 50 and cold water to the other 48, the thermostatic mixer valve 58 acts to mix the fluid coming from the two manifolds. When the fluid passing through the thermostatic mixer valve 58 is too cold, the thermostat 60 will contract allowing the piston 64 to move to the right in Fig.1, thus opening up the hot water manifold 50 to allow hot water to flow through the valve 58. As the thermostat 60 reaches the desired temperature, the thermostat 60 expands, pushing the piston 64 to the left in Fig.1 against the action of a spring (not shown) to open up the cold water manifold 48. The thermostat will eventually reach an equilibrium position where both the hot and cold water manifolds 50, 48 are open to a certain extent, allowing a stream of hot and a stream of cold water to flow therethrough and to be mixed to produce a mixed, warm water flow. The body 12 defines a mixing chamber 66 which has an outlet passageway 68 in fluid communication with an outlet spout 70.

The outer pipe-receiving wall 28 receives an outer pipe 72 so that the end of the pipe 72 abuts the shoulder 30. An inner pipe 74 is arranged inside the outer pipe 72 which is received in the inner pipe-receiving wall 40 so that the end thereof abuts shoulder 44. The inner diameter of the outer pipe 72 is sufficiently greater than the outer diameter of the inner pipe 74 to allow a useful flow of fluid therebetween. The pipes 72, 74 are secured to the apparatus 10 in known manner.

It can be seen that, in use, the inner pipe 74 can be arranged to carry hot water and the outer pipe 72 can be arranged to carry cold water. The cold water flows down the pipe 72 in the annular space defined between the outer surface of the inner pipe 74 and the inner surface of the outer pipe 72. Cold water then flows through the aperture 26 into the chamber 32 and through the passageway 36 into the cold water manifold 48. Hot water passes down the inner pipe 74 through the aperture 42 and the passageway 46 into the hot water manifold 50. The separate fluid streams are then mixed by means of the thermostatic mixer valve 58 as described above and are passed to mixing chamber 56 and then out through outlet passageway 68 into the mixed water outlet spout 70. The thermostatic mixer valve 58 in Fig.1 includes an integral flow control mechanism which may simply be a toggle function between maximum flow and no flow or it may allow progressive control of flow rate.

The valve apparatus 10 as shown in Figs.1 and 2 is advantageous since it allows the use of a tube-in-tube supply configuration for the hot and cold water. The advantages of providing the hot water tube inside the cold water tube are described above.

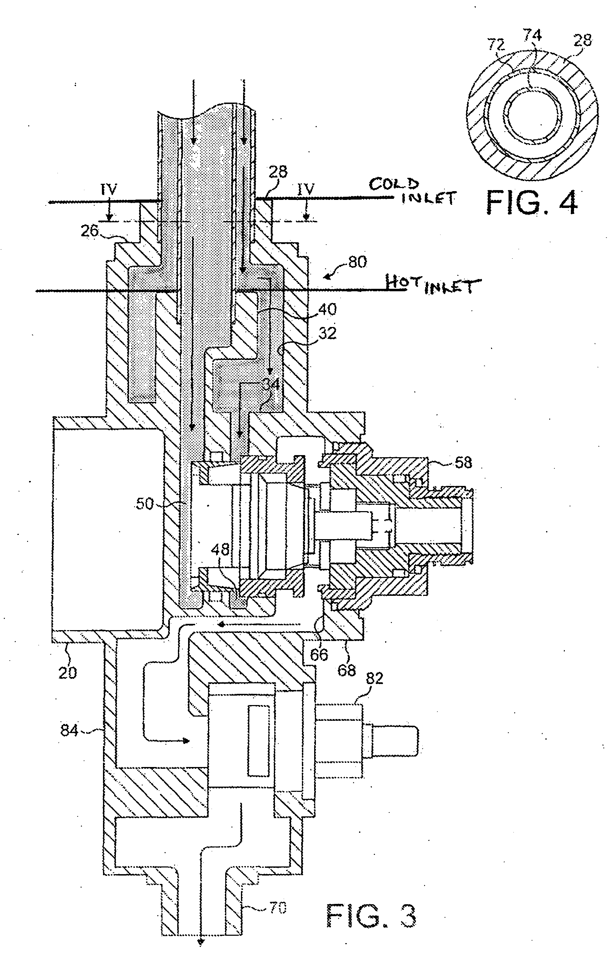

An alternative design of thermostatic mixer valve apparatus is shown in Figs.3 and 4. The thermostatic mixer valve apparatus 80 is substantially similar to that shown in Figs. 1 and 2 and parts corresponding to parts in Figs.1 and 2 carry the same reference numerals.

The thermostatic mixer valve apparatus 80 is similar in all respects to that shown in Figs.1 and 2 except that the thermostatic mixer valve 58 in the thermostatic mixer valve apparatus 80 does not include a flow rate control mechanism. Instead, a separate flow rate control mechanism 82 is provided downstream of the thermostatic mixer valve 58. Thus, the mixed water outlet passageway 68 feeds mixed water to an outlet chamber 84 and the flow rate of fluid from the mixed fluid outlet chamber 84 to the mixed fluid outlet spout 70 is regulated by the flow rate control mechanism 82 in known manner.

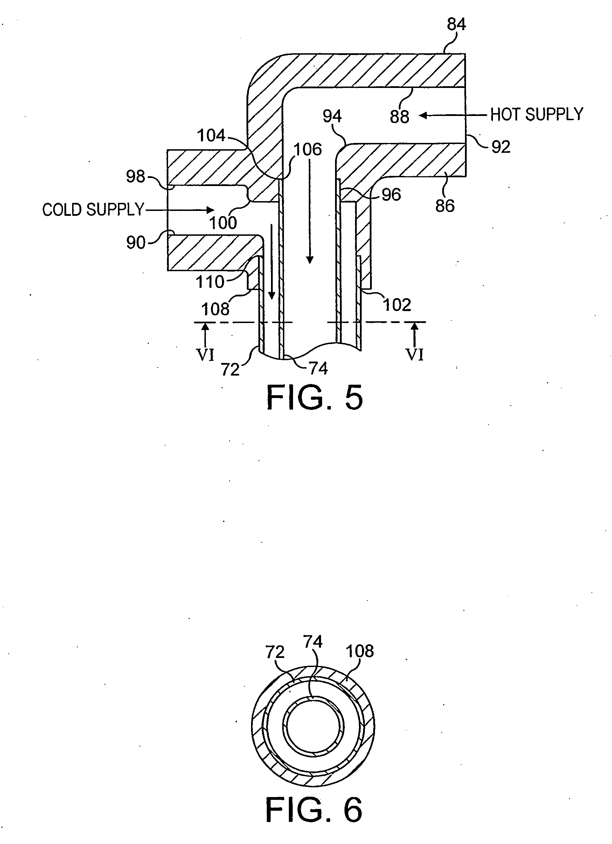

In Fig.5, a hot and cold water supply manifold 84 is shown in cross-section. The hot and cold supply manifold 84 comprises a body 86 having a hot water passageway 88 and a cold water passageway 90 formed therethrough. The hot water passageway 88 extends from a hot water inlet 92 via an elbow 94 to a hot water outlet 96. A cold water passageway 90 extends from a cold water inlet 98 via elbow 100 to a cold water outlet 102.

The hot water outlet 96 defines an inner pipe receiving formation 104 which comprises a circular recess terminating in a shoulder 106 against which the end of an inner pipe 74 can abut.

The cold water outlet 102 defines an outer pipe receiving formation 108 which also comprises a circular recess in the body 86 of the manifold 84 terminating in a shoulder 110 against which the end of an outer pipe can abut. The hot and cold water outlets are coaxial. The pipe receiving formations 104, 108 are arranged so that the inner and outer pipes 72, 74 received therein are coaxial. The pipes 72, 74 are secured to the pipe-receiving formations 104, 108 in conventional known fashion.

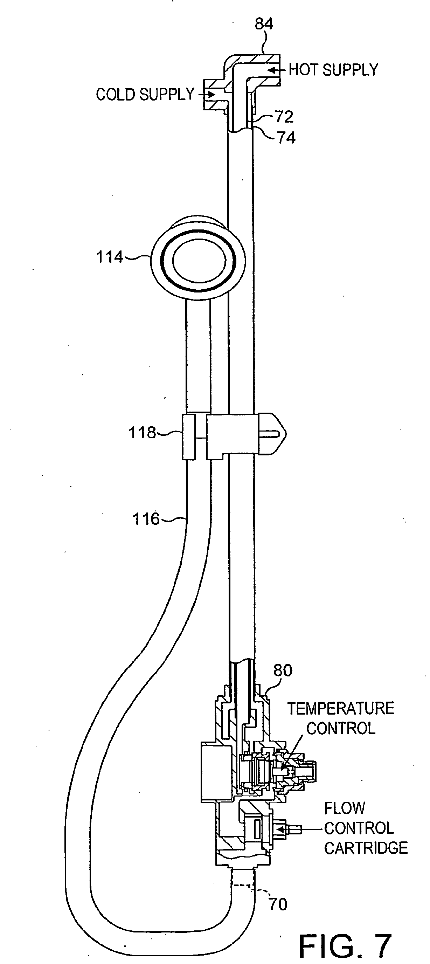

In Fig.7, a shower assembly in accordance with the second aspect of the invention is shown. The shower assembly 112 comprises the hot and cold supply manifold 84, inner and outer pipes 72, 74 extending from the manifold 84 to the thermostatic mixer valve apparatus 80. A shower head 114 is connected in fluid communication with the mixed fluid outlet spout 70 of the thermostatic mixer valve apparatus 80 by means of a flexible tube 116. The shower head 114 is carried in a shower bracket 118 which, itself, is slidably and lockably mounted to the outer pipe 72. In that way, the outer pipe 72 acts as a riser rail for the shower assembly 112.

In use, the hot and cold supply manifold 84 receives mains cold water through the cold water inlet 98 and mains hot water through the hot water inlet 92. The hot water passes through the inner pipe 72 via the aperture 42 to the hot water manifold 50 in the thermostatic mixer valve apparatus 80. The cold water passes via the cold water pipe 72 around the outside of the hot water pipe 74 through the aperture 26 in the thermostatic mixer valve apparatus 80 and into the cold water manifold 48. The hot and cold water pass via thermostatic mixer valve 58 where they are mixed to create a mixed warm water flow which passes via the mixed outlet passageway 68 into the mixed water outlet chamber 84 via flow rate regulating valve 82 to the outlet spout 70. The mixed warm water then passes along the flexible tube 116 and out through shower head 114. The arrangement shown in Fig.7 is advantageous because the hot water pipe 74 is insulated by the outer cold water pipe 72. The outer pipe 72 acts as a riser rail for the shower which provides an elegant and aesthetic solution to the problem of an exposed pipe shower installation. It should be noted that the thermostatic mixer valve apparatus 80 in Fig.7 is shown rotated through 90° degrees from its true position in the installation of Fig.7 for clarity purposes.

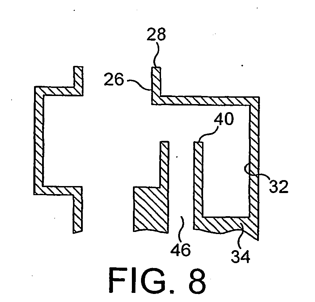

In Fig.8 a further alternative configuration of the pipe-receiving formations 28, 40 is shown. In Fig.8 the inner pipe-receiving formation 40 is arranged within the chamber 32 and offset from the outer pipe-receiving wall 28. The arrangement of Fig.8 is less preferable than that shown in Figs.1-4 but can be useful where an unobstructed cold water flow from the aperture 26 to the passageway 36 is required.

Although circular cross-section pipes are shown, pipes of any cross-section may be used.

## Claims

1. A mixer valve apparatus (10) comprising a body (12) defining a cold water manifold (48) and, a hot water manifold (50), the cold water manifold (48) being arranged to receive cold water from a cold water supply pipe (72) and the hot water manifold (50) being arranged to receive water from a hot water supply pipe (74) extending inside the cold water supply pipe (72), the cold water manifold (48) having a cold water inlet (26) and the hot water manifold (50) having a hot water inlet (42), the hot water inlet being arranged within and completely surrounded by the cold water manifold, a mixing chamber (66) for mixing the water from the cold and hot water manifolds and a mixed water outlet (70) in communication with the mixing chamber to allow mixed water to pass from the mixing chamber out of the body,
**characterized in that** the hot water inlet (42) is downstream of the cold water inlet (26).

2. A mixer valve apparatus according to claim 1, in which the cold and hot water inlets (26, 42) are coaxial.

3. A mixer valve apparatus according to any preceding claim, in which a flow rate valve (82) is provided to allow the user to vary flow rate.

4. A mixer valve apparatus according to claim 3, in which the flow rate valve (82) is arranged downstream of the mixing chamber (66) and upstream of the mixed water outlet (70).

5. A mixer valve apparatus according to any preceding claim, in which the cold water inlet (26) is arranged to receive a 25mm diameter pipe and the hot water inlet (42) is arranged to receive a 15mm diameter pipe.

6. A mixer valve apparatus according to any preceding claim including a thermostatic mixing device arranged to mix hot and cold water flows to produce a mixed warm water outlet flow.

## Patentansprüche

1. Mischventilvorrichtung (10) umfassend einen Körper (12), der einen Kaltwasserzuführkanal (48) und einen Heißwasserzuführkanal (50) abgrenzt, wobei der Kaltwasserzuführkanal (48) so angeordnet ist, dass er kaltes Wasser von einem Kaltwasserzuführrohr (72) aufnimmt, und der Heißwasserzuführkanal (50) so angeordnet ist, dass er Wasser von einem Heißwasserzuführrohr (74) aufnimmt, das sich innerhalb des Kaltwasserzuführrohrs (72) erstreckt, der Kaltwasserzuführkanal (48) einen Kaltwassereinlass (26) aufweist und der Heißwasserzuführkanal (50) einen Heißwassereinlass (42) aufweist, der Heißwassereinlass innerhalb des Kaltwasserzuführkanals angeordnet und davon vollständig umgeben ist, ferner eine Mischkammer (66) zum Mischen des Wassers aus den Kalt- und Heißwasserzuführkanälen und einen mit der Mischkammer in Verbindung stehenden Mischwasserauslass (70), um zu ermöglichen, dass Mischwasser aus der Mischkammer aus dem Körper läuft, **dadurch gekennzeichnet, dass** sich der Heißwassereinlass (42) stromabwärts vom Kaltwassereinlass (26) befindet.

2. Mischventilvorrichtung nach Anspruch 1, bei der die Kalt- und Heißwasserzuführkanäle (26, 42) koaxial sind.

3. Mischventilvorrichtung nach einem der vorherigen Ansprüche, bei der ein Durchflussventil (82) vorgesehen ist, um dem Anwender zu ermöglichen, den Durchfluss zu variieren.

4. Mischventilvorrichtung nach Anspruch 3, bei dem das Durchflussventil (82) stromabwärts von der Mischkammer (66) und stromaufwärts vom Mischwasserauslass (70) angeordnet ist.

5. Mischventilvorrichtung nach einem der vorherigen Ansprüche, bei der der Kaltwassereinlass (26) so ausgeführt ist, dass er ein Rohr mit 25 mm Durchmesser aufnimmt, und der Heißwassereinlass (42) so ausgeführt ist, dass er ein Rohr mit 15 mm Durchmesser aufnimmt.

6. Mischventilvorrichtung nach einem der vorherigen Ansprüche, enthaltend eine thermostatische Mischvorrichtung, die so ausgeführt ist, dass sie Heiß- und Kaltwasserströme mischt, um einen warmen Mischwasserstrom zu erzeugen.

## Revendications

1. Robinet mitigeur (10) comprenant un corps (12) qui définit un collecteur d'eau froide (48) et un collecteur d'eau chaude (50), le collecteur d'eau froide (48) étant conçu pour recevoir l'eau froide à partir d'un tuyau d'amenée d'eau froide (72) tandis que le collecteur d'eau chaude (50) est conçu pour recevoir l'eau à partir d'un tuyau d'amenée d'eau chaude (74) qui s'étend à l'intérieur du tuyau d'eau froide (72), le collecteur d'eau froide (48) ayant une entrée d'eau froide (26) tandis que le collecteur d'eau chaude (50) a une entrée d'eau chaude (42), l'entrée d'eau chaude étant disposée à l'intérieur du collecteur d'eau froide et étant entourée par celui-ci, une chambre de mélange (66) pour mélanger l'eau qui vient des collecteurs d'eau froide et d'eau chaude, et une sortie d'eau mélangée (70) qui communique avec la chambre de mélange pour permettre à l'eau mélangée de sortir du corps à partir de la chambre de mélange,
**caractérisé en ce que** l'entrée d'eau chaude (42) se trouve en aval de l'entrée d'eau froide (26).

2. Robinet mitigeur selon la revendication 1, dans lequel les entrées d'eau froide et d'eau chaude (26, 42) sont coaxiales.

3. Robinet mitigeur selon l'une quelconque des revendications précédentes, dans lequel un robinet de débit (82) est prévu, pour permettre à l'utilisateur de modifier le débit.

4. Robinet mitigeur selon la revendication 3, dans lequel le robinet de débit (82) est disposé en aval de la chambre de mélange (66) et en amont de la sortie d'eau mélangée (70).

5. Robinet mitigeur selon l'une quelconque des revendications précédentes, dans lequel l'entrée d'eau froide (26) est disposée de manière à recevoir un tuyau de 25 mm de diamètre, et l'entrée d'eau chaude (42) est disposée de manière à recevoir un tuyau de 15 mm de diamètre.

6. Robinet mitigeur selon l'une quelconque des revendications précédentes, comprenant un dispositif mitigeur thermostatique qui est conçu pour mélanger les écoulements d'eau chaude et d'eau froide afin de produire un écoulement d'eau tiède mélangée.
